# EUROPÄISCHE PATENTANMELDUNG

(11) **EP 2 103 978 A1**
(43) Veröffentlichungstag der Anmeldung: **23.09.2009**
(21) Anmeldenummer: 09003911.6
(22) Anmeldetag: 18.03.2009
(51) Int. Cl.: G02B 7/00, G02B 1/11, G02C 11/08, H05B 3/86, C03C 17/34

(54) **Schichtsystem zur Beheizung optischer Oberflächen und gleichzeitiger Reflexminderung**

(30) Priorität: 19.03.2008 DE 102008014900
(71) Anmelder: Rodenstock GmbH, 80469 München (DE); Fraunhofer-Gesellschaft zur Förderung der angewandten Forschung e.V., 80686 München (DE)
(72) Erfinder: Schulz, Ulrike Dr., 07751 Jena (DE); Füchsel, Kevin, 07747 Jena (DE); Kaiser, Norbert Dr., 07745 Jena (DE); Scherg, Gerd-Peter Dr., 85598 Baldham (DE); Scherschlicht, Rüdiger Dr., 82008 Unterhaching (DE)
(74) Vertreter: Müller-Boré & Partner Patentanwälte

(57) **Zusammenfassung**

Die vorliegende Erfindung betrifft ein optisches Element oder Bauteil, welches sich dadurch auszeichnet, dass deren Oberfläche reflexvermindert ist und gleichzeitig die Möglichkeit besteht, die Oberfläche durch Anlegen einer elektrischen Spannung zu beheizen.

## Beschreibung

Die vorliegende Erfindung betrifft ein optisches Element oder Bauteil, welches sich dadurch auszeichnet, dass die Oberfläche reflexvermindert ist und gleichzeitig die Möglichkeit besteht, die Oberfläche durch Anlegen einer elektrischen Spannung zu beheizen.

Das Beheizen optischer Oberflächen ist hauptsächlich zur Verhinderung von Beschlagbildung (Feuchtigkeit) sinnvoll. Für transparente optische Elemente ist dafür eine transparente elektrisch leitfähige Beschichtung notwendig.

Die Anwendung von Indium-Zinn-Oxid-(ITO)-Schichten als Heizschicht ist bereits bekannt. US 5,354,966 und US 5,756,991 beschreiben ein optisches Element, bestehend aus Polyestersubstrat und beschichtet mit ITO, welches durch Anlegen einer Spannung beheizt werden kann. Die Anwendung einer solchen Schicht als äußere Schicht hat aber den Nachteil, dass durch den hohen Brechungsindex der ITO-Schicht die Reflexion der Oberfläche erhöht wird und die Transmission sinkt.

Des Weiteren befassen sich einige Dokumente im Stand der Technik mit einer gleichzeitigen Realisierung von Antibeschlags- und Entspiegelungswirkung, was jedoch nicht auf dem Prinzip des Beheizens beruht. So beschreibt US 2003/0030909 A1 ein System für optische Linsen, aufgebaut aus einer ersten wasserabsorbierenden Schicht aus Polyvinylalkohol mit darin eingebrachten TiO₂-Teilchen und gegebenenfalls einer darauf angeordneten zweiten wasserabsorbierenden Schicht. Die Nanopartikel sollen dabei die Härte erhöhen. EP 0 871 046 A1 offenbart die Verwendung von porösen AR-Schichten, welche in einem Vakuumprozess hergestellt werden. Darunter befindet sich eine wasserabsorbierende Schicht. Die Antireflex (AR)-Schichten werden bei höheren Drücken (∼10⁻⁴ mbar) abgeschieden, um eine gewisse Porosität erreichen zu können. Die Packungsdichte beträgt 20-80%.

Bekannt sind außerdem Schichtsysteme, die neben der Antireflexeigenschaft auch antistatische Eigenschaften aufweisen. Eine Leitfähigkeit im Kilo-Ohm-Bereich wird hier durch die Verwendung dünner Metallschichten (US 6,794,809) oder dünner ITO-Schichten (US 6,764,580) gewährleistet. Diese weisen aber keine für eine Heizung ausreichenden elektrischen Eigenschaften auf. Insbesondere sind die ITO-Schichten zu dünn.

In DE 197 52 889 (Dicke 130 nm, AR-Schichtsystem mit ITO beginnend) und US 5,874,801 (ITO immer als erste Schicht, Dicke 1-20 nm) ist der Einbau von ITO-Schichten zum Zweck der elektromagnetischen Abschirmung beschrieben.

US 6,863,397 B2 beschreibt Entspiegelungsschichtsysteme für den sichtbaren Spektralbereich (380-700 nm), die zum Teil auch ITO enthalten. Die Designwellenlänge für diesen Bereich beträgt 510-520 nm und wird auch derart verwendet. Für diese Designwellenlänge beträgt die optische λ/4-Dicke 130 nm, die optische 3λ/4-Dicke entsprechend 390 nm. Es ist angegeben, daß die ITO-Schicht bis zu 300 nm optischer Dicke betragen kann. Dies ist einerseits eine Dicke unterhalb der 3 λ/4-Dicke und andererseits auch nur eine theoretische, in den Beispielen nicht annähernd demonstrierte Obergrenze. Vielmehr betragen die physikalischen Schichtdicken für ITO in den Beispielen lediglich 61 nm und 63 nm, was etwa der λ/4-Dicke entspricht.

In US 5,772,862 werden unter anderem Schichten zum Verhindern von Reflexionen mit dem Ziel einer anti-irisierenden Eigenschaft offenbart. Zwar enthalten Beispiel 7 und die davon abgeleiteten Beispiele eine ITO-Schicht, jedoch liegt das Reflexionsniveau, welches in den Beispielen belegt wird, bei 6-8%; vgl. Figuren 5 und 6 bzw. Kurven 52 und 62. Das Verhalten der Schichten entspricht somit nicht dem Reflexionsverhalten von "echten" Antireflexschichten auf Glas mit R < 1 % bis 2%. Darüber hinaus handelt es sich um Schichtsysteme, die für eine Anordnung zwischen zwei Glasscheiben vorgesehen werden.

Die der vorliegenden Erfindung zugrundeliegende technische Aufgabe besteht somit darin, optische Elemente bzw. Bauteile, insbesondere Brillengläser, bereitzustellen, welche sich dadurch auszeichnen, dass deren Oberfläche reflexionsvermindert ist und gleichzeitig die Möglichkeit besteht, die Oberfläche durch Anlegen einer elektrischen Spannung zu beheizen.

Diese Aufgabe wird durch Bereitstellen der in den Ansprüchen gekennzeichneten Ausführungsformen gelöst.

Insbesondere wird gemäß der vorliegenden Erfindung ein optisches Element bzw. Bauteil bereitgestellt, umfassend ein Glas- oder ein transparentes Polymersubstrat, welches unbeschichtet oder mit funktionellen Schichten (organisch oder anorganisch) ausgestattet sein kann, mit einem darauf angeordneten Interferenzschichtsystem, welches umfasst:
(a) mindestens eine transparente, elektrisch leitfähige Schicht mit einer optischen Schichtdicke von mindestens 3λ/4 der zu entspiegelnden Wellenlänge,
(b) eine oder mehrere Schichten aus einem anorganischen Material mit einer Brechzahl n < 2, vorzugsweise n< 1,6, in einer Dicke von 10 bis 200 nm, wobei das Interferenzschichtsystem derart ausgelegt ist, dass eine Restreflexion von ≤3 % (Spektralbereich: 400 - 680nm) resultiert.

Gemäß der vorliegenden Erfindung können unterhalb und/oder oberhalb der transparenten, elektrisch leitfähigen Schicht ein oder mehrere Interferenzschichten derart angeordnet sein, dass eine Restreflexion von ≤3 % (Spektralbereich: 400 - 680nm) resultiert. Beispielsweise kann unterhalb der transparenten, elektrisch leitfähigen Schicht mindestens eine Schicht mit niedriger Brechzahl (n < 1,6) und mindestens eine Schicht mit hoher Brechzahl (n < 1,9) angeordnet sein.

Das Material der transparenten, elektrisch leitfähigen Schicht ist vorzugsweise aus ITO, Zn/AIO, IZO (Indium Zinc Oxide) oder CTO (Cadmium Stannate) ausgewählt.

Das Material der Schicht mit niedriger Brechzahl ist vorzugsweise aus SiO₂, MgF₂ oder Al₂O₃, am meisten bevorzugt SiO₂, ausgewählt.

Das Material der Schicht mit hoher Brechzahl ist vorzugsweise aus Ta₂O₅, TiO₂, ZrO₂, HfO₂, ITO, Nb₂O₅ oder Si₃N₄, am meisten bevorzugt Ta₂O₅, ausgewählt.

In einer Ausführungsform der vorliegenden Erfindung kann auf der äußeren Oberfläche des optischen Elements eine die Kratzfestigkeit des erfindungsgemäßen optischen Elements verbessernde Hartschicht in einer Dicke von 50 bis 200 nm vorgesehen werden. Vorzugsweise ist diese Schicht aus SiO₂.

Üblicherweise ist das erfindungsgemäße optische Element als Brillenglas gestaltet, wobei Kontakte zur Beheizung der Brille an der transparenten, elektrisch leitfähigen Schicht vorgesehen sind.

Die Figuren zeigen:
Fig. 1 zeigt beispielhaft vier spezifische Ausführungsformen eines erfindungsgemäßen optischen Elements mit einem Interferenzschichtsystem auf Basis von SiO₂ und Ta₂O₅;
Fig. 2 und 3 zeigen das spektrale Verhalten eines erfindungsgemäßen, im nachstehenden Beispiel erhaltenen CR39-Brillenglases; und
Fig. 4 zeigt die Erwärmung eines CR39-Brillenglases bei Anwendung von Schichtsystem A (enthält 260 nm ITO mit spezifischem Widerstand 4,6 x 10⁻⁶ Ohm m) nach Anlegen einer Spannung von 3 V gemäß der vorliegenden Erfindung.

Gemäß der vorliegenden Erfindung wird eine transparente, elektrisch leitfähige Schicht (z.B. ITO, Zn/AIO, IZO (Indium Zinc Oxide), CTO (Cadmium Stannate), im weiteren als "Heizschicht" bezeichnet, so in ein Interferenzschichtsystem integriert, dass zum einen die Schichtdicke der transparenten leitfähigen Schicht (mindestens 150nm, bevorzugt 250nm, geeignet ist, einem Heizvorgang unterworfen zu werden bzw. einen Heizvorgang durchzuführen und auf der anderen Seite die Reflexion der vorder- und rückseitigen Grenzfläche des optischen Elements 3% nicht übersteigt. Unterhalb der Heizschicht muss jedoch mindestens eine entsprechende Schicht mit niedriger Brechzahl, beispielsweise eine SiO₂- oder MgF₂-Schicht, und eine hochbrechende Schicht angeordnet sein.

Für die Schichtdicken und das verwendete Material der umgebenden Schichten sind verschiedene Möglichkeiten denkbar. Im Unterschied zu gewöhnlich angewandten Antireflexschichtsystemen, bei denen die optische Dicke (nd) der hochbrechenden Schichten höchstens 2λ/4 der Designwellenlänge (550 nm) betragen, enthalten alle erfindungsgemäßen AR-Designs mit Heizfunktion eine hochbrechende Schicht der Dicke 3λ/4 bis 4λ/4, d.h. es gilt n x d > 3λ/4 (n_{ITO}= 1,95 - 2,0).

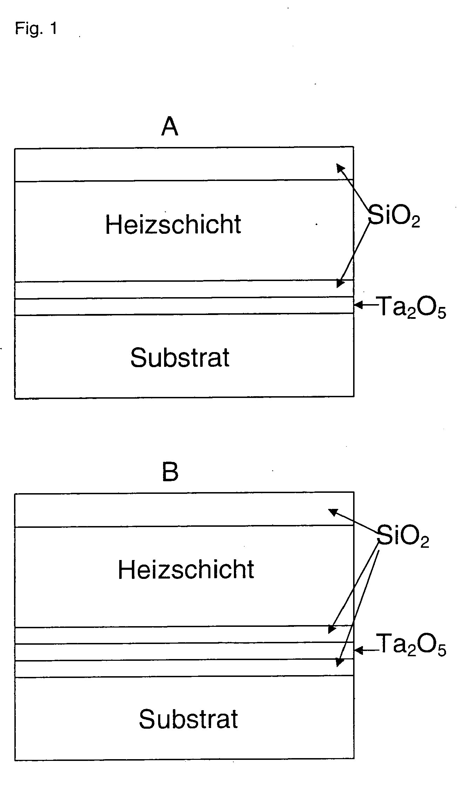

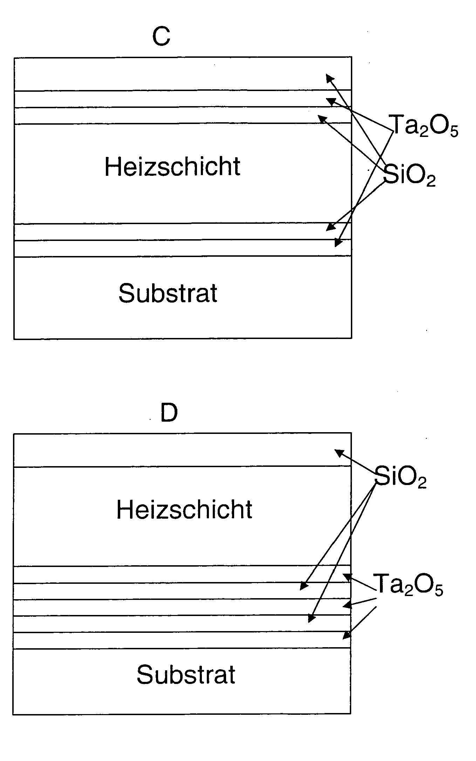

In der nachfolgenden Tabelle 1 sind vier spezifische Ausführungsformen von Schichtsystemen gemäß der vorliegenden Erfindung angegeben. Die Systeme A, B, C und D sind außerdem in Figur 1 schematisch dargestellt. Anstelle von Ta₂O₅ können andere hochbrechende Materialien wie z.B. TiO₂, Nb₂O₅, Si₃N₄, HfO₂ oder ZrO₂ und an Stelle des niedrigbrechenden SiO₂ auch MgF₂ bzw. Al₂O₃ verwendet werden. Die Herstellung der Schichten kann z.B. durch Aufdampfen oder Sputtern im Vakuum erfolgen.

**Tabelle 1: Materialien und Schichtdicken für verschiedene Ausführungsformen erfindungsgemäßer Schichtsysteme (erste Schicht auf Substrat, äußeres Medium Luft)**

| | **Schichtfolge A** | **Schichtfolge B** | **Schichtfolge C** | **Schichtfolge D** |
|---|---|---|---|---|
| 1 | Ta₂O₅ 14nm | SiO₂ 45nm | Ta₂O₅ 17nm | Ta₂O₅ 8nm |
| 2 | SiO₂ 21 nm | Ta₂O₅ 16nm | SiO₂ 28nm | SiO₂ 50nm |
| 3 | Heizschicht 260nm | SiO₂ 30nm | Heizschicht 212nm | Ta₂O₅ 31 nm |
| 4 | SiO₂ 86nm | Heizschicht 250nm | SiO₂ 7nm | SiO₂ 22nm |
| 5 | | SiO₂ 86nm | Ta₂O₅ 33nm | Ta₂O₅ 55nm |
| 6 | | | SiO₂ 99nm | Heizschicht 202nm |
| 7 | | | | SiO₂ 86nm |

Die Herstellung solcher erfindungsgemäßer Schichtsysteme kann vorzugsweise wie folgt durchgeführt werden:
(i) Abscheidung der ersten zum Schichtsystem gehörenden Schichten einschließlich der transparenten elektrisch leitfähigen Beschichtung in einem Vakuumprozess;
(ii) Maskierung der für die Kontaktierung vorgesehenen Fläche oder Aufbringen von Kontaktstellen und Maskierung (Abdeckung) dieser. Alternativ kann man die Kontakte auch vor der Heizschicht aufbringen;
(iii) Aufbringen der restlichen, zum optischen Schichtsystem gehörenden Schichten.
   Falls in (ii) keine Kontaktierung, sondern nur die Abdeckung geeigneter Stellen vorgenommen wurden, sind die nachstehenden Arbeitsschritte nötig:
(iv) Freilegung der in (ii) abgedeckten Flächen für die Kontaktierung, ggf. Maskierung der beschichteten Fläche, wenn die Kontaktierung durch eine Vakuumbeschichtung erfolgen soll.
(v) Aufbringen der Kontakte auf die Kontaktstellen.

Das Glassubstrat für das erfindungsgemäße optische Element bzw. Bauteil, welches vorzugsweise ein Brillenglas ist, kann aus einem Kunststoff oder einem anorganischen Material aufgebaut sein. Als Glassubstrat kann ein behandeltes oder unbehandeltes Kunststoffglas, beispielsweise aus Polythiourethan, PMMA, Polycarbonat, Polyacrylat oder Polydiethylenglycolbisallylcarbonat (CR 39^{®}), oder ein behandeltes oder unbehandeltes Mineralglas verwendet werden. Dieses Substrat kann auch mit einer Hartschicht oder einem Primer-/Pufferlack beschichtet sein.

Das nachfolgende Beispiel ist angegeben, um die Erfindung weiter zu erläutern, ohne sie dadurch einzuschränken.

### Beispiel: Heizbares Brillenglas mit entspiegelter Oberfläche

Ein Brillenglas aus CR39 wird durch ionengestützte Verdampfung in der Anlage APS 904 (Leybold Optics) mit dem Schichtsystem A beschichtet. Figur 1A zeigt den schematischen Schichtaufbau. Dabei wird zunächst eine dünne 14nm dicke Ta₂O₅-Schicht abgeschieden. Danach folgen 21 nm einer niedrigbrechenden Schicht aus SiO₂. Die Heizschicht aus ITO wird als dritte Schicht in das System eingebaut. Dazu wird bei Raumtemperatur eine 260nm dicke Schicht aufgebracht. Nach der Maskierung der Kontaktfläche wird die Kratzschicht bzw. Abdeckschicht aus SiO₂ aufgedampft. Anschließend werden die Kontaktstellen am Rand des Brillenglases freigelegt und dafür die transparente Hauptfläche durch eine Maskierung geschützt. Auf die freiliegenden Kontaktflächen wird nun eine ca. 100nm dicke Goldschicht aufgedampft.

Alle Schichtmaterialien werden in einem Ratenbereich von 0,1 bis 2 nm/s aufgedampft. Der O₂-Fluß wird in allen Schichten zwischen 7 -15 sccm geregelt.

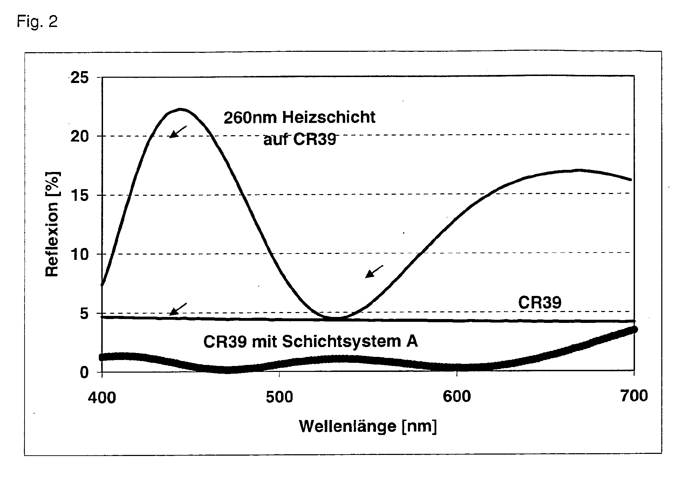

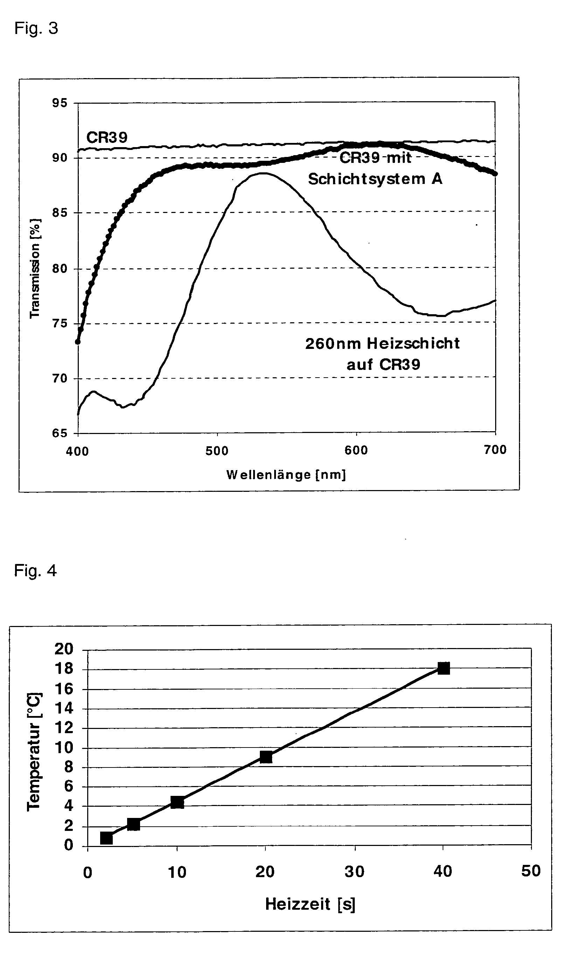

Die Figuren 2 und 3 zeigen das spektrale Verhalten eines CR39-Brillenglases vor der Beschichtung sowie nach jeweils einseitiger Belegung mit einer 260 nm dicken Heizschicht sowie mit Schichtsystem A. Die mittlere Reflexion von Schichtsystem A beträgt zwischen 420 nm und 680 nm 0,8%, ohne Entspiegelung jedoch rund 14%. Jeweils 4% Restreflex kommen von den unbeschichteten Rückseiten. Die mit Schichtsystem A beschichtete Probe erreicht außerdem eine Transmission nahe 90%, während die Transmission der mit der Einzelschicht belegten Probe weniger als 80% beträgt.

Der zeitlich aufgelöste Temperaturanstieg des beschichteten Systems ist in Figur 4 dargestellt. Nachdem eine elektrische Spannung von 3 V angelegt wurde, erhöht sich die Temperatur auf der Brillenoberfläche innerhalb weniger Sekunden. Eine so beheizte Brille zeigt keinerlei Beschlag bei Temperaturübergängen von -5°C auf 20°C (60% Luftfeuchte).

## Patentansprüche

1. Optisches Element bzw. Bauteil, umfassend ein Glas- oder ein transparentes Polymersubstrat, mit einem darauf angeordneten Interferenzschichtsystem, welches umfasst:
(a) mindestens eine transparente, elektrisch leitfähige Schicht mit einer optischen Schichtdicke von mindestens 3λ/4 der zu entspiegelnden Wellenlänge,
(b) eine oder mehrere Schichten aus einem anorganischen Material mit einer Brechzahl n < 2, vorzugsweise n < 1,6, in einer Dicke von 10 bis 200 nm, wobei das Interferenzschichtsystem derart ausgelegt ist, dass eine Restreflexion von ≤3 % (Spektralbereich: 400 - 680nm) resultiert.

2. Optisches Element gemäß Anspruch 1, wobei das Material der transparenten, elektrisch leitfähigen Schicht aus ITO, Zn/AIO, IZO (Indium Zinc Oxide) oder CTO (Cadmium Stannate) ausgewählt ist.

3. Optisches Element gemäß Anspruch 1 oder 2, wobei unterhalb der transparenten, elektrisch leitfähigen Schicht mindestens eine Schicht mit niedriger Brechzahl und mindestens eine Schicht mit hoher Brechzahl angeordnet sind.

4. Optisches Element gemäß Anspruch 3, wobei das Material der Schicht mit niedriger Brechzahl aus SiO₂, MgF₂ oder Al₂O₃, am meisten bevorzugt SiO₂, ausgewählt ist.

5. Optisches Element gemäß Anspruch 3, wobei das Material der Schicht mit hoher Brechzahl aus Ta₂O₅, TiO₂, ZrO₂, HfO₂, ITO, Nb₂O₅ oder Si₃N₄, am meisten bevorzugt Ta₂O₅, ausgewählt ist.

6. Optisches Element gemäß einem der Ansprüche 1 bis 5, wobei die äußere Schicht aus SiO₂ ist.

7. Optisches Element gemäß einem der Ansprüche 1 bis 6, welches als Brillenglas gestaltet ist, wobei elektrische Kontakte, beispielsweise Goldkontakte, zur Beheizung der Brille an der transparenten, elektrisch leitfähigen Schicht vorgesehen sind.
